# DEMANDE DE BREVET EUROPEEN

(11) **EP 0 614 732 A1**
(43) Date de publication de la demande: **14.09.1994**
(21) Numéro de dépôt: 93400495.3
(22) Date de dépôt: 26.02.1993
(51) Int. Cl.: B25J 17/02, B25J 9/06

(54) **Articulation pour bras robotique**

(71) Demandeur: Gabillet, Maurice, F-92100 Boulogne Billancourt (FR)
(72) Inventeur: Gabillet, Maurice, F-92100 Boulogne Billancourt (FR)

(57) **Abrégé**

Articulation pour bras robotique, permettant des pivotements suivant deux axes, dans laquelle les actionneurs linéaires (5a, 5b) de l'articulation sont logés à l'intérieur des éléments (1, 2) du bras que l'articulation relie. Si l'articulation comporte un anneau (4) formant croisillon de cardan, celui-ci présente des rainures orthogonales dans lesquelles coulissent les extrémités sphériques (7) des tiges (6) des actionneurs logés dans l'un et l'autre éléments.

## Description

La présente invention concerne les éléments constitutifs et le mécanisme de commande d'une articulation modulaire. Le but de la présente invention est de fournir une articulation pour bras robotique qui permette d'obtenir une plus grande facilité d'utilisation avec une construction simple et peu coûteuse.

Pour obtenir ces résultats, l'invention fournit une articulation reliant entre eux deux éléments d'un bras robotique, tout en permettant des pivotements d'un élément par rapport à l'autre autour d'au moins deux axes distincts, l'articulation étant pourvue de moyens d'actionnement destinés à réaliser lesdits pivotements et comprenant des actionneurs linéaires,
caractérisée en ce que lesdits éléments sont creux et lesdits actionneurs linéaires sont logés à l'intérieur desdits éléments.

De préférence, l'articulation permet le pivotement d'un élément autour de deux axes non parallèles liés à l'autre élément, et les actionneurs linéaires sont disposés pour réaliser des pivotements autour de ces deux axes.

Les robots industriels actuels, robots de manutention, d'assemblage, robots portiques, etc.. , ont en général un encombrement dynamique important et une directivité le plus souvent limitée par l'environnement dans lequel ils sont appelés à travailler.

La mise bout à bout de plusieurs articulations, la première étant de préférence fixée à une manivelle et la dernière portant le préhenseur, constitue un robot souple dont le nombre d'axes peut être adapté à l'usage envisagé. L'insertion des organes de commande à l'intérieur des corps cylindriques de l'articulation donnera à l'ensemble une finesse et une compacité facilitant la protection de l'appareil en milieu hostile et la pénétration de l'organe de préhension dans un espace clos à travers une ouverture de faible dimension.

La description de l'articulation suivant l'invention suffira à faire comprendre les possibilités offertes par un robot composé en totalité ou partiellement d'une série d'articulations montées en série. La rigidité de l'ensemble est concrétisée par un verrouillage mécanique et un montage sans jeu.

Selon un premier type de réalisation, l'articulation selon l'invention comporte un croisillon intermédiaire avec ou sans anneau de liaison relié à un premier élément et à un deuxième élément symétrique au premier, et à au moins un actionneur, celui-ci comprenant une tige mobile parallèlement à la direction de l'élément qui contient ledit actionneur, cette tige étant terminée par une tête sphérique qui coulisse dans une rainure dudit anneau intermédiaire. Il est préféré dans ce cas que l'articulation comporte deux actionneurs dans un même élément, ces actionneurs étant dans des plans perpendiculaires entre eux et se croisant suivant une droite qui passe par le centre dudit anneau et qui est parallèle à la direction desdites tiges des actionneurs.

Dans une réalisation pratique de ce premier type, l'articulation est composée de deux corps cylindriques creux reliés entre eux par un joint de cardan du type à anneau et croisillons. Les corps peuvent pivoter l'un par rapport à l'autre à l'intérieur d'un angle solide de plus ou moins 60° environ. Un vérin double effet, hydraulique ou électrique, est fixé latéralement et axialement sur chacun des corps. L'extrémité de leur tige coulisse dans une rainure usinée dans chacun des croisillons du joint de cardan. Le coulisseau de forme sphérique laisse toute liberté au débattement angulaire des corps cylindriques. L'action poussante d'un vérin fait pivoter l'anneau du joint de cardan et donc le deuxième corps cylindrique dans son plan. La combinaison de l'action des deux vérins donnera à l'axe des deux corps une position angulaire comprise à l'intérieur d'un cône solide de 120° environ, chacun des vérins peut, si nécessaire, être remplacé par un couple de vérins identiques montés symétriquement par rapport à l'axe du corps cylindrique, l'un fonctionnant en tirant, l'autre en poussant. La protection d'ensemble peut être faite par un soufflet.

Le coulisseau peut également être constitué par une douille coulissant sur les bras des croisillons.

La position angulaire du joint de cardan peut être repérée soit par un capteur angulaire monté sur l'articulation, soit par un capteur linéaire lié à la tige de vérin.

Suivant un autre type de réalisation, dans l'articulation selon l'invention, un élément contient au moins trois actionneurs, non situés dans un même plan, et agissant directement sur l'autre des éléments reliés par l'articulation. Dans ce cas, de préférence, les éléments sont en contact par une surface en forme de fraction de sphère, des moyens étant prévus pour assurer la permanence du contact et les trois actionneurs d'un élément agissant par pression sur une surface transversale de l'autre élément.

Les faces de contact des noyaux plongeurs peuvent, de préférence, présenter une surface cylindrique venant s'emboîter dans des rainures usinées sur la surface transversale de l'autre élément.

Dans une réalisation de cet autre type, l'articulation se compose de deux corps cylindriques identiques montés bout-à-bout, l'extrémité de forme sphérique du premier venant se loger dans la cavité hémisphérique creuse de l'extrémité du second. Un câble en acier monté dans un trou axial solidarise les deux corps cylindriques entre eux, tout en leur laissant leur liberté d'orientation. Trois logements cylindriques sont percés axialement à 120° l'un de l'autre dans les corps. Ces logements contiennent des noyaux plongeurs qui, sous une pression hydraulique, exercent une action poussante sur la face supérieure du corps cylindrique aval, le faisant ainsi pivoter autour de la rotule hémisphérique.

A chaque position angulaire du corps cylindrique avant correspond une position bien définie des noyaux plongeurs du corps cylindrique amont, la rigidité de l'assemblage étant réalisée par le blocage de ces noyaux et la tension du câble. Trois capteurs "lisent" la position des plongeurs par comptage des rainures usinées sur leur pourtour. En phase opérationnelle, un microprocesseur calcule la position des plongeurs en fonction de l'orientation que l'on veut obtenir et commande les électrovannes situées dans les corps en conséquence.

L'invention sera mieux comprise en se référant aux figures qui illustrent de façon limitative deux modes de mise en oeuvre de l'invention.

La figure 1 est une coupe axiale de l'articulation avec représentation du débattement du corps cylindrique inférieur.

La figure 2 présente le schéma d'alimentation du couple de deux vérins qui agissent sur l'anneau du joint de cardan.

La figure 3 présente le croisillon du joint de cardan avec coupe partielle pour montrer le mode de liaison vérin-croisillon.

La figure 4 présente ce même croisillon équipé d'une douille à billes (ou un coussinet), et son articulation avec l'extrémité de la tige de vérin.

La figure 5 présente la coupe rabattue d'une articulation suivant un autre mode de réalisation de l'invention.

La figure 6 présente une vue perspective partielle de l'articulation de la figure 5.

Les figures 7 et 8 sont des coupes selon les lignes VII-VII et VIII-VIII de la figure 5, présentent un exemple de montage des électrovannes d'alimentation de décharge des vérins plongeurs à l'intérieur des corps cylindriques.

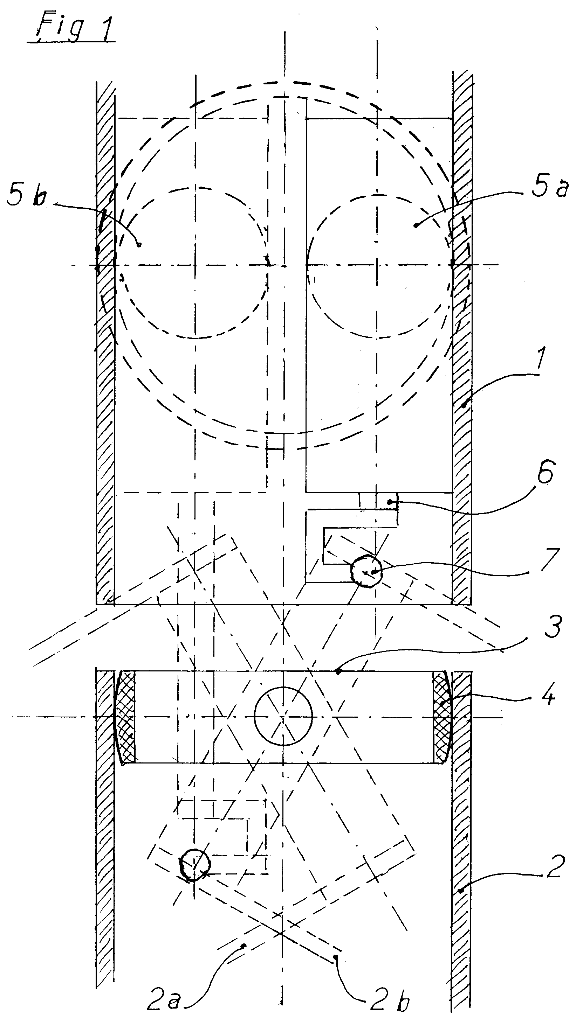

On se réfère d'abord à la figure 1. Un corps cylindrique creux 1 porte deux oreilles 3 reliées par l'intermédiaire d'un élément de liaison pivotant 4 à un deuxième corps cylindrique identique 2. Un vérin hydraulique à double effet 5a est fixé axialement sur la face intérieure du corps cylindrique, la tige du côté de l'élément de liaison. La tige 6 porte a son extrêmité un coulisseau 7 de forme sphérique.

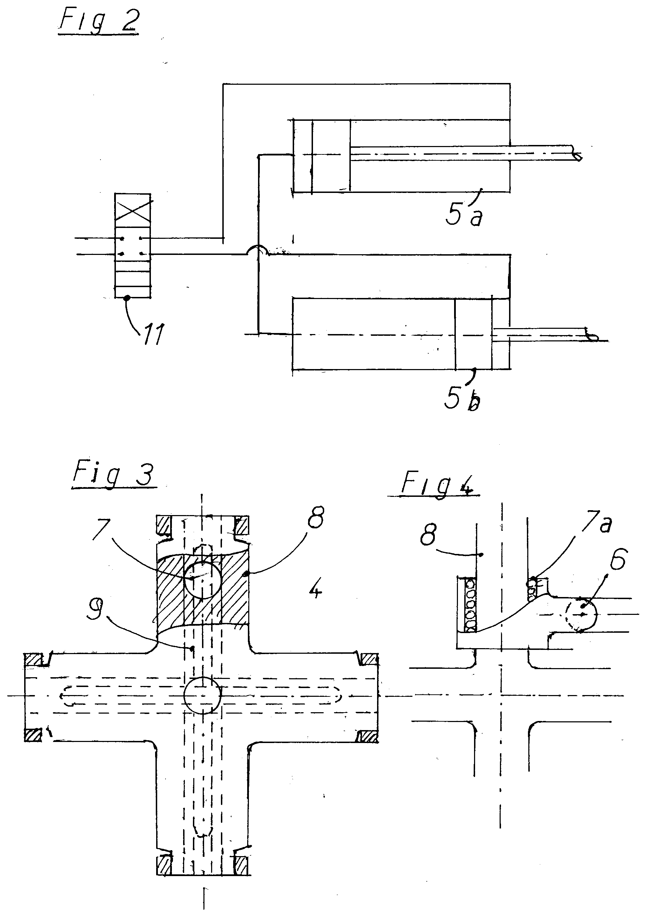

On se réfère maintenant à la figure 3. L'élément de liaison 4 entre les deux corps porte un croisillon rainuré 8. Les rainures 9 ont une forme adaptée à la forme du coulisseau sphérique 7.

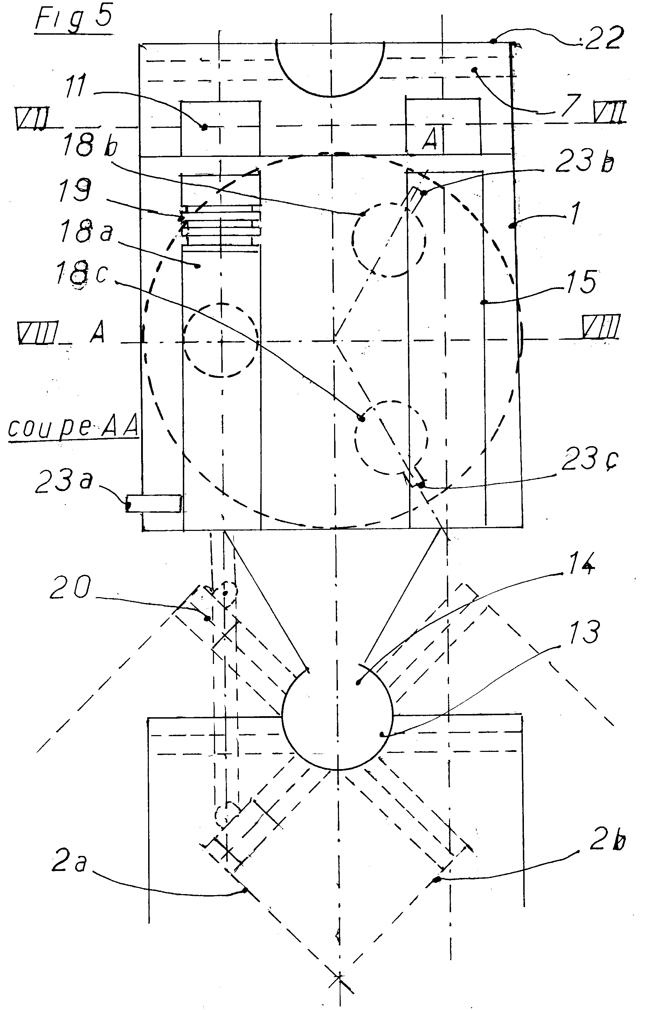

La figure 4 montre une variante, dans laquelle le coulisseau 7 est remplacé par une bague 7a articulée sur la tige 6 du verin 5a, et qui entoure, de façon coulissante, un bras du croisillon 8.

Revenons à la figure 1. Le fonctionnement de l'articulation est alors le suivant : l'action tirante ou poussante du vérin 5a oriente l'élément 4, et par suite le corps 2 dans son plan, soit à droite (position 2a), soit à gauche (position 2b). L'action sur l'élément de liaison 4 d'un vérin contenu dans le corps 2 aura le même effet sur le corps 1 mais dans un plan perpendiculaire.

L'action du vérin 5a peut être doublée par l'action d'un vérin 5b placé symétriquement au vérin 5a dans le corps 1, sa tige étant reliée également au croisillon 4. En se référant à la figure 2, le fonctionnement est alors le suivant : les deux vérins 5a et 5b étant alimentés en série, lorsqu'on commande l'électrovanne 11, un des vérins aura une action poussante, l'autre une action rentrante : la force de rotation sur l'élément sera donc à peu près doublée.

Cette réalisation suivant l'invention constitue en définitive une articulation commandée dont on peut par action de deux ou quatre vérins orienter une extrémité par rapport à l'autre dans toute position comprise à l'intérieur d'un angle solide d'ouverture d'environ 120°.

Les positions angulaires de l'articulation, et par conséquent l'angle des deux corps cylindriques, sont contrôlées soit par un capteur angulaire monté sur l'articulation, soit par un capteur linéaire lié à la tige du vérin.

A titre d'exemple, on va décrire maintenant un autre mode de réalisation en se référant aux figures 5 et 6. L'articulation suivant l'invention est maintenant constituée de deux corps cylindriques identiques 1 et 2, dont une extrémité comporte une cavité hémisphérique 13, et l'autre extrémité 14 une rotule mâle. Les corps sont percés de trois trous borgnes 15 situés sur le pourtour et à 120° l'un de l'autre.

La face frontale opposée 22 au corps 2 présente trois rainures décallées 7, orientées à 120°, et qui sont élargies sur leur fond, voir figure 6.

Un noyau plongeur 18a, 18b, 18c, pourvu de rainures circonférentielles 19 est logé dans chacun des trous borgnes. Il porte un patin articulé 20 qui est maintenu captif dans la rainure. Une alimentation en fluide hydraulique commande, à partir de l'électrovanne 11, le déplacement du noyau plongeur qui est en appui sur l'extrémité 22 du corps aval 2. Cette action poussante provoque le déplacement angulaire du corps 2 dans le plan du noyau commandé jusqu'à la position 2a. Les autres noyaux plongeurs auront des actions similaires dans des plans à 120°.

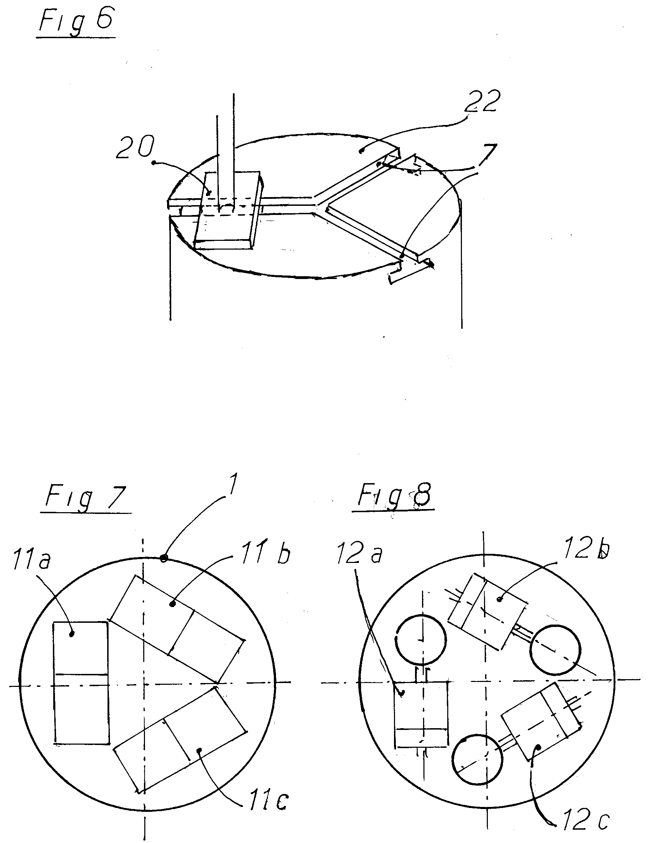

Le fonctionnement de l'articulation est alors le suivant : à chaque position angulaire du corps cylindrique 2 à l'intérieur d'un cône solide d'ouverture de l'ordre de 120°, correspond une position précise des noyaux 18a, 18b, 18c. Cette position peut être repérée par le comptage des rainures circonférentielles 19 par des capteurs 23a, 23b, 23c. En fonction de l'orientation souhaitée pour le corps 2, un microcalculateur détermine les positions respectives des noyaux 18a, 18b, 18c. Il commande alors l'ouverture des électrovannes 11a, 11b, 11c logées dans le haut du corps cylindrique 1 suivant la figure 7, et met à l'échappement des électrovannes 12a, 12b, 12c logées latéralement dans le corps cylindrique 1 suivant la figure 8 pendant la durée adéquate. La fermeture des six électrovannes assure le blocage positif du corps cylindrique 2 dans la position désirée.

Terminons la description en présentant deux modes de fonctionnement d'un robot composé de n articulations suivant l'une ou l'autre des réalisations décrites ci-dessus. Au repos, tous les corps cylindriques, montés sur une manivelle, sont repliés sur eux-mêmes pour former un arc de cercle. La première solution consiste à commander simultanément toutes les articulations en même temps avec la rotation de la manivelle. La cible définie par ses coordonnées X, Y, Z, , , sera ainsi atteinte rapidement. Bien entendu, un programme spécifique réalise le calcul de la position que doit avoir chaque corps cylindrique en fonction de l'objectif choisi. Une autre solution consiste à utiliser une méthode séquentielle, méthode à utiliser lorsque l'on veut contourner un obstacle ou pénétrer à l'intérieur d'une ouverture de faible dimension : au fur et à mesure de la rotation de la manivelle, on donne au corps cylindrique 1 qui porte le préhenseur la position qu'aura le corps n en fin d'opération, puis successivement celles qu'occuperont les corps n-1, n-2, n-3, etc... Idem pour les corps 2, 3...n. On obtient ainsi un déroulement du bras, chacun des corps prenant successivement la position du précédent. L'emprise du bras sur l'environnement, au cours du cycle de positionnement, sera ainsi réduite au minimum.

## Revendications

1. Articulation reliant entre eux deux éléments (1, 2) d'un bras robotique, tout en permettant des pivotements d'un élément par rapport à l'autre autour d'au moins deux axes distincts, l'articulation étant pourvue de moyens d'actionnements linéaires montés à l'intérieur et parallèlement à l'axe des éléments creux, l'extrémité de ces moyens d'actionnement coulissant dans les croisillons de l'articulation ou dans des rainures usinées dans la face supérieure de l'élément.

2. Articulation selon la revendication 1, caractérisée en ce que l'actionnement linéaire peut être constitué d'un vérin hydraulique, d'un vérin électrique ou d'un vérin à vis.

3. Articulation selon la revendication 1, caractérisée en ce qu'elle permet le pivotement autour de deux ou plusieurs axes non parallèles d'un élément par rapport à l'autre, les actionneurs linéaire étant disposés pour réaliser leur pivotement autour de ces axes.

4. Articulation selon la revendication 2, caractérisée en ce qu'au moins un actionneur (5) comprend une tige (6) mobile parallèlement à la direction de l'élément qui contient ledit actionneur, cette tige étant terminée par une tête sphérique (7) qui coulisse à l'intérieur des bras du croisillon ou par une douille à l'extérieur.

5. Articulation selon la revendication 2, caractérisée en ce qu'un élément contient au moins trois actionneurs (8a, 8b, 8c) non situés dans un même plan et agissant directement sur un autre élément relié à lui par une articulation, cette dernière comportant un moyen pour assurer la permanence du contact.
